# EUROPEAN PATENT APPLICATION

(11) **EP 4 397 714 A1**
(43) Date of publication of application: **10.07.2024**
(21) Application number: 23820127.1
(22) Date of filing: 09.06.2023
(51) Int. Cl.: C08L 67/04, C08L 67/02, C08L 3/02, C08J 5/18

(54) **BIODEGRADABLE COMPOSITION AND BIODEGRADABLE FILM**

(30) Priority: 10.06.2022 KR 20220070912; 08.06.2023 KR 20230073708
(71) Applicant: LG Chem, Ltd., Yeongdeungpo-gu Seoul 07336 (KR)
(72) Inventor: PARK, Hyunwoo, Daejeon 34122 (KR); SHIM, Hong Shik, Daejeon 34122 (KR); JEON, Kwang Seoung, Daejeon 34122 (KR); HWANG, Daehyeon, Daejeon 34122 (KR); PARK, Minsung, Daejeon 34122 (KR); JE, Hwaheon, Daejeon 34122 (KR); YUN, Haesung, Daejeon 34122 (KR)
(74) Representative: Plasseraud IP
(86) International application number: PCT/KR2023/007911
(87) International publication number: WO 2023/239192

(57) **Abstract**

The present invention provides a biodegradable composition and a biodegradable film, each comprising polybutylene adipate terephthalate(PBAT) and polybutylene adipate terephthalate(PBAT) in which maleic acid is ester-bonded to a terminal hydroxy group(-OH).

## Description

### FIELD OF THE INVENTION

### CROSS-REFERENCE TO RELATED APPLICATION(S)

This application claims the benefit of Korean Patent Application No. 10-2022-0070912 filed on June 10, 2022 and Korean Patent Application No. 10-2023-0073708 filed on June 8, 2023 in the Korean Intellectual Property Office, the disclosures of which are incorporated herein by reference in their entirety.

The present invention relates to a biodegradable composition and a biodegradable film.

### BACKGROUND OF THE INVENTION

Recently, as interest in environmental protection and eco-friendliness has increased quickly, the need for methods of cultivating environmentally-friendly agricultural crops is increasing. Mulching farming method is known as one of these environmentally-friendly farming methods. When cultivating agricultural crops, this is a method in which the surface of the soil is covered with a mulching film, etc., thereby preventing the growth of weeds, preventing pests, maintaining soil moisture or regulating soil temperature, preventing soil erosion by rainwater in a rainy weather, and reducing the use of pesticides.

Mulching films used in such mulching farming methods greatly contribute to the productivity of agricultural crops, but there are difficulties in collecting and recycling them after use. Usually, synthetic resins such as polypropylene and polyethylene are used and biodegradable ingredients are added as additives to impart biodegradability, but in reality, biodegradation of the synthetic resin itself is impossible. Further, there is a problem that synthetic resins that are left without being biodegraded contaminate the soil.

Thus, attempts have been made to produce mulching films using polybutylene adipate terephthalate(PBAT), which is a biodegradable plastic. However, polybutylene adipate terephthalate(PBAT) has high elongation, while there is a problem that mechanical properties such as Young's modulus are lower than those of existing films such as polyethylene. Further, since polybutylene adipate terephthalate (PBAT) is a 100% petroleum-based material, it has a low bio-material content.

Thus, attempts have been made to improve the physical properties and increase the content of bio raw materials by compounding various biodegradable materials with polybutylene adipate terephthalate(PBAT). However, there is a problem that compatibility between polybutylene adipate terephthalate and other biodegradable materials is low, which results in poor tensile properties.

### SUMMARY OF THE INVENTION

### TECHNICAL PROBLEM

It is an object of the present invention to provide a biodegradable composition and a biodegradable film which are excellent in excellent tensile properties such as tear strength, maximum tensile strength, elongation at break, and Young's modulus, and increased in the content of bio raw materials.

### TECHNICAL SOLUTION

According to one embodiment of the present invention, there is provided a biodegradable composition comprising: polybutylene adipate terephthalate(PBAT); and polybutylene adipate terephthalate(PBAT) in which maleic acid is ester-bonded to a terminal hydroxy group(-OH).

According to another embodiment of the present invention, there is provided a biodegradable film comprising: polybutylene adipate terephthalate(PBAT); and polybutylene adipate terephthalate(PBAT) in which maleic acid is ester-bonded to a terminal hydroxy group(-OH).

Now, a biodegradable composition and a biodegradable film according to specific embodiments of the invention will be described in more detail.

Unless particularly mentioned herein, the term "including" or "containing" refers to including some element (or component) without any limitation, and should not be construed as excluding addition of other elements (or components).

Throughout the description, the term "polylactic acid prepolymer" refers to polylactic acid having a weight average molecular weight of 1,000 to 50,000 g/mol, which is obtained by oligomerizing lactic acid.

Throughout the description, the term "poly(3-hydroxypropionate)prepolymer" refers to poly(3-hydroxypropionate) having a weight average molecular weight of 1,000 to 50,000 g/mol, which is obtained by oligomerizing 3-hydroxypropionate.

Further, unless otherwise stated herein, the weight average molecular weight of polylactic acid prepolymer, poly(3-hydroxypropionate) prepolymer, and copolymer can be measured using a gel permeation chromatography(GPC). Specifically, the prepolymer or copolymer is dissolved in chloroform to a concentration of 2 mg/ml, then 20 µl of the dissolved polymer is injected into GPC, and GPC analysis is performed at 40°C. At this time, chloroform is used as the mobile phase for GPC, the flow rate is 1.0 mL/min, and the column used is two Agilent Mixed-B units connected in series. RI Detector is used as a detector. The values of Mw can be obtained using a calibration curve formed using a polystyrene standard sample. Nine kinds of the polystyrene standard samples are used with the molecular weight of 2,000 g/mol, 10,000 g/mol, 30,000 g/mol, 70,000 g/mol, 200,000 g/mol, 700,000 g/mol, 2,000,000 g/mol, 4,000,000 g/mol, and 10,000,000 g/mol.

As used herein, the term "substituted or unsubstituted" means being unsubstituted or substituted with one or more substituent groups selected from the group consisting of deuterium; a halogen group; a nitrile group; a nitro group; a hydroxy group; a carbonyl group; an ester group; an imide group; an amino group; a phosphine oxide group; an alkoxy group; an aryloxy group; an alkylthioxy group; an arylthioxy group; an alkylsulfoxy group; an arylsulfoxy group; a silyl group; a boron group; an alkyl group; a cycloalkyl group; an alkenyl group; an aryl group; an aralkyl group; an aralkenyl group; an alkylaryl group; an alkylamine group; an aralkylamine group; a heteroarylamine group; an arylamine group; an arylphosphine group; and a heterocyclic group containing at least one of N, O and S atoms, or being unsubstituted or substituted with a substituent group to which two or more substituent groups of the above-exemplified substituent groups are linked. For example, "a substituent group in which two or more substituents are linked" may be a biphenyl group. Namely, a biphenyl group may be an aryl group, or it may be interpreted as a substituent group in which two phenyl groups are linked.

In order to prepare a composition for producing a biodegradable film, polybutylene adipate terephthalate may be compounded with other biodegradable materials, such as thermoplastic starch, but polybutylene adipate terephthalate is hydrophobic, while thermoplastic starch is hydrophilic. Therefore, there is a problem that polybutylene adipate terephthalate and thermoplastic starch are not mixed well, which leads to deterioration of compatibility.

Therefore, the present inventors have found that when 'polybutylene adipate terephthalate in which maleic acid is ester-bonded to a terminal hydroxy group' as a compatibilizer is used in a biodegradable composition containing polybutylene adipate terephthalate, the compatibility is improved and the mechanical properties such as tensile strength of the biodegradable film produced from such a composition are improved, and completed the present invention.

Further, as the content of thermoplastic starch increases in the biodegradable composition containing polybutylene adipate terephthalate, it has the advantage of being cheap and economical, improving biodegradability, and increasing the content of bio-based carbon, but by using 'polybutylene adipate terephthalate in which maleic acid is ester-bonded to a terminal hydroxy group' as a compatibilizer in the biodegradable composition, it is possible to contain a large amount of the thermoplastic starch and thus exhibit the above-mentioned effects, and completed the present invention.

According to one embodiment of the present invention, there is provided a biodegradable composition comprising: polybutylene adipate terephthalate(PBAT); and polybutylene adipate terephthalate(PBAT) in which maleic acid is ester-bonded to a terminal hydroxy group(-OH).

The 'polybutylene adipate terephthalate in which maleic acid is ester-bonded to a terminal hydroxy group' can be used as a compatibilizer to improve the compatibility of the biodegradable composition. Further, the 'polybutylene adipate terephthalate in which maleic acid is ester-bonded to a terminal hydroxy group' can function as a chain extender to increase molecular weight, increase melt viscosity, and improve formability such as stretchability.

The 'polybutylene adipate terephthalate in which maleic acid is ester-bonded to a terminal hydroxy group' can be prepared by performing an esterification reaction of maleic acid and/or maleic anhydride with the terminal hydroxy group of polybutylene adipate terephthalate. At this time, the maleic anhydride may have higher reactivity in esterification reaction with polybutylene adipate terephthalate than the maleic acid has.

For example, the polybutylene adipate terephthalate in which maleic acid is ester-bonded to a terminal hydroxy group may be represented by the following Chemical Formula 1 or 2. 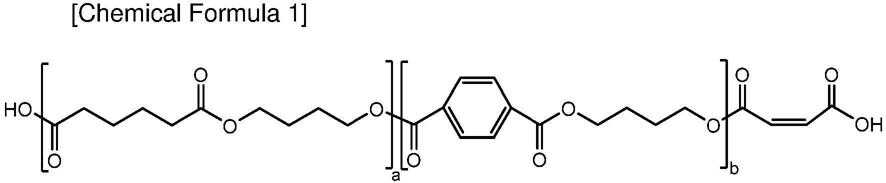 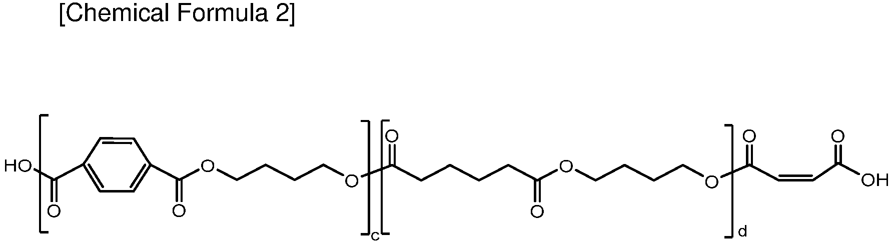
wherein, in Chemical Formulas 1 and 2,
a to d may be each independently an integer of 1 to 500, 5 to 450, 10 to 400, or 20 to 300.

The 'polybutylene adipate terephthalate in which maleic acid is ester-bonded to a terminal hydroxy group' represented by Chemical Formula 1 may be ester-bonded by performing an esterification reaction of one carboxyl group contained in maleic acid with a terminal hydroxy group of polybutylene adipate terephthalate. Further, the 'polybutylene adipate terephthalate in which maleic acid is ester-bonded to a terminal hydroxy group' represented by Chemical Formula 2 may be ester-bonded by performing an esterification reaction of the two carboxyl groups contained in maleic acid with the terminal hydroxy group of another polybutylene adipate terephthalate.

The polybutylene adipate terephthalate in which maleic acid is ester-bonded to a terminal hydroxy group can be prepared by performing an esterification reaction of maleic acid and/or maleic anhydride with polybutylene adipate terephthalate, as described above, wherein by adjusting the content of maleic acid and/or maleic anhydride, the content of polybutylene adipate terephthalate, reaction temperature, reaction time, type and content of additives, etc., polybutylene adipate terephthalate in which maleic acid is ester-bonded to the terminal hydroxy group can be prepared, and the weight average molecular weight, structure, viscosity, etc. of polybutylene adipate terephthalate in which maleic acid is ester-bonded to the terminal hydroxy group, can be controlled.

Meanwhile, in the past, a compatibilizer in which maleic anhydride was grafted to polybutylene adipate terephthalate was sometimes used. Radicals are less likely to form in the middle of the polybutylene adipate terephthalate chain, or the grafting reaction efficiency is low due to steric hindrance, whereas polybutylene adipate terephthalate in which maleic acid is ester-bonded has the advantage of significantly higher reaction efficiency. Thereby, when polybutylene adipate terephthalate in which maleic acid is ester-bonded to the terminal hydroxy group is included as a compatibilizer in the biodegradable composition and film, it is excellent in tensile properties such as tear strength, maximum tensile strength, elongation at break, and Young's modulus as compared to the case of using a conventional compatibilizer grafted with maleic anhydride.

In the biodegradable composition according to one embodiment, polybutylene adipate terephthalate in which maleic acid is ester-bonded to the terminal hydroxy group may be contained in an amount of 0.5% by weight or more and 10.0% by weight or less based on 100% by weight of the total solid content of the biodegradable composition. For example, polybutylene adipate terephthalate in which maleic acid is ester-bonded to the terminal hydroxy group may be contained in an amount of 0.7% by weight or more, 0.9% by weight or more, 1.0% by weight or more, 2.0% by weight or more, and 9.0% by weight or less, 7.0% by weight or less, 6.0% by weight or less, and 5.0% by weight or less, based on 100% by weight of the total solid content of the biodegradable composition. If polybutylene adipate terephthalate in which maleic acid is ester-bonded to the terminal hydroxy group is included in an excessively small amount, the effect of improving compatibility may not be appear, and thus, the mechanical properties such as tensile strength of the film produced from the composition may decrease, and if polybutylene adipate terephthalate in which maleic acid is ester-bonded to the terminal hydroxy group is included in an excessively larger amount, the melt viscosity may become excessively high and formability may decrease.

Further, the biodegradable composition according to the one embodiment may further include polyhydroxyalkanoate. The polyhydroxyalkanoate is not limited thereto, but may be poly(3-hydroxybutyrate), poly(4-hydroxybutyrate), poly(2-hydroxypropionate), poly(3-hydroxypropionate), poly(3-hydroxyvalate), poly(4-hydroxyvalate) or poly(5-hydroxyvalate), but in order to improve the tensile properties of a film using the biodegradable composition, the polyhydroxyalkanoate is preferably poly(3-hydroxypropionate).

Further, the polyhydroxyalkanoate has a weight average molecular weight(Mw) of 50,000 to 300,000 g/mol, which is measured using gel permeation chromatography(GPC), and more specifically, it has a weight average molecular weight of 50,000 g/mol or more, 70,000 g/mol or more, or 100,000 g/mol or more, and 300,000 g/mol or less, or 200,000 g/mol or less, or 150,000 g/mol or less. If the weight average molecular weight of the polyhydroxyalkanoate is too small, the overall mechanical properties may be significantly reduced, and if the weight average molecular weight is too large, the processing process may be difficult, and the processability and elongation may be low.

Further, the biodegradable composition may contain the polyhydroxyalkanoate in an amount of 3 to 40% by weight, and more specifically, in an amount of 3% by weight or more, 5% by weight or more, or 7% by weight or more, and 40% by weight or less, 35% by weight or less, and 30% by weight or less, based on the total solid content of 100% by weight of the biodegradable composition. If the polyhydroxyalkanoate is included in an excessively small amount in the biodegradable composition, the tensile properties, such as Young's modulus and yield tensile strength, of the film produced therefrom may be reduced, and if the polyhydroxyalkanoate is included in an excessively large amount in the biodegradable composition, the elongation of the film produced therefrom may be lowered.

Further, the biodegradable composition according to one embodiment may further include a hydroxyalkanoate-lactide copolymer.

The hydroxyalkanoate-lactide copolymer may be a block copolymer including one or more polyhydroxyalkanoate(PHA) blocks and one or more polylactic acid blocks. As the hydroxyalkanoate-lactide copolymer contains the above-mentioned blocks, it can exhibit the environmental friendliness and biodegradability of polyhydroxyalkanoate and polylactic acid.

The hydroxyalkanoate may be 3-hydroxybutyrate, 4-hydroxybutyrate, 2-hydroxypropionate, 3-hydroxypropionate, medium-chain-length (D)-3-hydroxycarboxylate containing 6 to 14 carbon atoms, 3-hydroxyvalate, 4-hydroxyvalate or 5-hydroxyvalate. Therefore, the hydroxyalkanoate-lactide copolymer may be 3-hydroxybutyrate-lactide copolymer, 4-hydroxybutyrate-lactide copolymer, 2-hydroxypropionate-lactide copolymer, 3-hydroxypropionate-lactide copolymer, 4-hydroxyvalate-lactide copolymer or 5-hydroxyvalate-lactide copolymer. For example, the hydroxyalkanoate-lactide copolymer may be 3-hydroxypropionate-lactide copolymer to improve flexibility and mechanical properties, etc.

The 3-hydroxypropionate-lactide copolymer may be a block copolymer obtained by polymerizing polylactic acid prepolymer and poly(3-hydroxypropionate) prepolymer.

The 3-hydroxypropionate-lactide copolymer exhibits the excellent tensile strength and elastic modulus characteristics possessed by the polylactic acid prepolymer, and also the poly(3-hydroxypropionate) prepolymer lowers the glass transition temperature(Tg), increasing flexibility and improving mechanical properties such as impact strength, which can prevent the brittleness properties that polylactic acid has, such as poor elongation and easily cracking.

The polylactic acid prepolymer may be prepared by performing a fermentation or polycondensation of lactic acid.

The polylactic acid prepolymer may have a weight average molecular weight of 1,000 g/mol or more, or 5,000 g/mol or more, or 6,000 g/mol or more, or 8,000 g/mol or more, and 50,000 g/mol or less, or 30,000 g/mol or less. If it is desired to increase the crystallinity of blocks containing repeating units derived from polylactic acid prepolymers in the final prepared block copolymer, the polylactic acid prepolymer preferably has a high weight average molecular weight of more than 20,000 g/mol, or 22,000 g/mol or more, or 23,000 g/mol or more, or 25,000 g/mol or more, and 50,000 g/mol or less, or 30,000 g/mol or less, or 28,000 g/mol or less, or 26,000 g/mol or less.

If the weight average molecular weight of the polylactic acid prepolymer is 20,000 g/mol or less, the crystals of the polymer are small, which makes it difficult to maintain the crystallinity of the polymer in the final prepared block copolymer. If the weight average molecular weight of the polylactic acid prepolymer is more than 50,000 g/mol, the rate of side reactions occurring inside the prepolymer chain becomes faster than the reaction rate between the polylactic acid prepolymers during polymerization.

On the other hand, the term 'lactic acid' as used herein refers to L-lactic acid, D-lactic acid, or a mixture thereof.

The poly(3-hydroxypropionate)prepolymer may be prepared by performing a fermentation or a polycondensation polymerization of 3-hydroxypropionate.

The weight average molecular weight of the poly(3-hydroxypropionate) prepolymer may be 1,000 g/mol or more, or 5,000 g/mol or more, or 8,000 g/mol or more, or 8,500 g/mol or more, and 50,000 g/mol or less, or 30,000 g/mol or less. If it is intended to increase the crystallinity of repeating units derived from poly(3-hydroxypropionate) prepolymer in the final prepared block copolymer, the poly(3-hydroxypropionate) prepolymer preferably have a high weight average molecular weight of more than 20,000 g/mol, or 22,000 g/mol or more, or 25,000 g/mol or more, and 50,000 g/mol or less, or 30,000 g/mol or less, or 28,000 g/mol or less.

As explained for the polylactic acid prepolymer, if the weight average molecular weight of the poly(3-hydroxypropionate) prepolymer is 20,000 g/mol or less, the polymer crystals are small, which makes it difficult to maintain the crystallinity of the polymer in the final prepared block copolymer, and if the weight average molecular weight of the poly(3-hydroxypropionate) prepolymer is more than 50,000 g/mol, the side reaction rate occurring inside the prepolymer chain is higher than the reaction rate between poly(3-hydroxypropionate) prepolymers during polymerization.

That is, at least one of the polylactic acid prepolymer and the poly(3-hydroxypropionate) prepolymer may have a weight average molecular weight of more than 20,000 g/mol and 50,000 g/mol or less.

On the other hand, the lactic acid and 3-hydroxypropionate may be plastic and biodegradable compounds prepared from renewable sources by microbial fermentation, and the block copolymer comprising polylactic acid prepolymer and poly(3-hydroxypropionate) prepolymer formed by polymerizing the same may also exhibit environmental friendliness and biodegradability. For this reason, the biodegradable composition and the biodegradable film containing the block copolymer may contain a large amount of bio raw materials while exhibiting environmental friendliness and biodegradability.

The 3-hydroxypropionate-lactide copolymer is a block copolymer obtained by polymerizing polylactic acid prepolymer and poly(3-hydroxypropionate) prepolymer. In the block copolymer, a weight ratio of the polylactic acid prepolymer and the poly(3-hydroxypropionate) prepolymer is 95:5 to 50:50, 90:10 to 55:45, 90:10 to 60:40, 90: 10 to 70:30 or 90:10 to 80:20. If the poly(3-hydroxypropionate) prepolymer is included in an excessively small amount relative to the polylactic acid prepolymer, brittleness may increase, and if the poly(3-hydroxypropionate) prepolymer is included in an excessively large amount relative to the polylactic acid prepolymer, the molecular weight is lowered, and processability and heat stability may be reduced.

The 3-hydroxypropionate-lactide copolymer includes one or more poly(3-hydroxypropionate) blocks and one or more polylactic acid blocks as mentioned above, and can exhibit high crystallinity.

For example, the 3-hydroxypropionate-lactide copolymer may have a crystallinity(X_{c_PLA}) of the polylactic acid block in the copolymer of more than 0 and 50 or less, or a crystallinity(X_{c_P(3HP)}) of the poly(3-hydroxypropionate) block of 0 to 50, or more than 0 and 50 of less, which is calculated according to the following Equations 1 and 2 using the crystallization temperature and melting temperature measured by differential scanning calorimetry.

Further, the sum of the crystallinity of the polylactic acid block and the crystallinity of the poly(3-hydroxypropionate) block in the copolymer may be 20 to 100, and more specifically, 20 or more, or 30 or more, or 32 or more, and 100 or less, or 70 or less, or 50 or less, or 48 or less.

As the copolymer satisfies the above-mentioned crystallinity, it can improve flexibility and mechanical properties in a well-balanced manner, and can simultaneously exhibit the excellent strength properties of polylactic acid and the excellent elongation properties of poly(3-hydroxypropionate).

On the other hand, if the sum of the crystallinity is too high, biodegradability and processability may decrease, and if the sum of the crystallinity is too low, the strength may decrease. Crystallinity of polylactic acid block(Xc_PLA) = [(PLA Tm area) - (PLA Tcc area)]/93.7 in Equation 1, the PLA Tm area is the integral value for the peak at the melting temperature(Tm) of the polylactic acid(PLA) block within the block copolymer measured by differential scanning calorimetry, and the PLA Tcc area is the integral value for the peak at the crystallization temperature(Tcc) of the polylactic acid block within the block copolymer measured by differential scanning calorimetry. Crystallinity of poly(3-hydroxypropionate) block(Xc_P(3HP)) = [(P(3HP) Tm area) - (P(3HP) Tcc area)]/64 in Equation 2, the P(3HP) Tm area is the integral value for the peak at the melting temperature(Tm) of the poly(3-hydroxypropionate) (P(3HP)) block within the block copolymer measured by differential scanning calorimetry, and the P(3HP) Tcc area is the integral value for the peak at the crystallization temperature(Tcc) of the poly(3-hydroxypropionate) block within the block copolymer measured by differential scanning calorimetry.

Further, the integral value for the peaks at Tm and Tcc means a value obtained by integrating the areas under the peaks representing Tm and Tcc, respectively.

At this time, the differential scanning calorimetry for measuring Tm and Tcc of each block can be performed using a PerkinElmer DSC800 equipment. Further, the sample to be analyzed is heated at a rate of 10°C per minute from 25°C to 250°C under a nitrogen atmosphere, cooled again from 250°C to -50°C at a rate of -10°C per minute, and then again heated from -50°C to 250° at a rate of 10°C per minute, so that an endothermic curve can be obtained and Tm and Tcc can be confirmed.

The hydroxyalkanoate-lactide copolymer has a weight average molecular weight(Mw) of 50,000 to 300,000 g/mol, which is measured using gel permeation chromatography(GPC), and more specifically, it has a weight average molecular weight of 50,000 g/mol or more, 70,000 g/mol or more, or 100,000 g/mol or more, and 300,000 g/mol or less, or 200,000 g/mol or less, or 150,000 g/mol or less. If the weight average molecular weight of the hydroxyalkanoate-lactide copolymer is too small, the overall mechanical properties may decrease significantly, and if the weight average molecular weight is too large, the processing process may be difficult and processability and elongation may be low.

The biodegradable composition according to one embodiment includes the hydroxyalkanoate-lactide copolymer, wherein the copolymer may be included, for example, in an amount of 3 to 40% by weight based on the total solid content of 100% by weight of the biodegradable composition, and more specifically, it may be included in an amount of 3% by weight or more, 5% by weight or more, or 7% by weight or more, and 40% by weight or less, 35% by weight or less, and 30% by weight or less.

If the hydroxyalkanoate-lactide copolymer is included in an excessively small amount in the biodegradable composition, the tensile properties, such as Young's modulus and yield tensile strength, of the film produced therefrom may be reduced, and if the hydroxyalkanoate-lactide copolymer is included in an excessively large amount in the biodegradable composition, the elongation of the film produced therefrom may be lowered.

The biodegradable composition according to one embodiment includes polybutylene adipate terephthalate(PBAT).

The polybutylene adipate terephthalate(PBAT) is a biodegradable resin and may be included in an amount of 30 to 80% by weight, and more specifically in an amount of 30% by weight or more, 35% by weight or more, 40% by weight or more, and 80% by weight or less, 75% by weight or less, and 70% by weight or less, based on 100% by weight of the total solid content of the biodegradable composition.

If the polybutylene adipate terephthalate(PBAT) is included in an excessively small amount in the biodegradable composition, the elongation of the film produced using it may be lowered, and if polybutylene adipate terephthalate(PBAT) is included in an excessively large amount in a biodegradable composition, the tensile properties, such as Young's modulus and yield tensile strength of the film produced using it may be reduced.

The weight ratio of the hydroxyalkanoate-lactide copolymer and polybutylene adipate terephthalate(PBAT) contained in the biodegradable composition according to one embodiment may be 5:95 to 50:50, 5:95 to 40:60, or 10:90 to 30:70.

If the polybutylene adipate terephthalate(PBAT) is included in an excessively small amount compared to the hydroxyalkanoate-lactide copolymer, the elongation may be lowered, and if the polybutylene adipate terephthalate(PBAT) is included in an excessively large amount compared to the hydroxyalkanoate-lactide copolymer, the tensile properties such as Young's modulus and yield tensile strength may deteriorate.

The biodegradable composition according to one embodiment may include thermoplastic starch.

The biodegradable composition may further include thermoplastic starch to enhance the processability of polybutylene adipate terephthalate and speed up the rate of biodegradation.

The thermoplastic starch may be a starch imparted with thermoplasticity in which a plasticizer is added to starch, which is a natural polymer, and thus does not carbonize at a prescribed temperature or higher and can freely change its shape, like existing general-purpose resins such as polyethylene, polystyrene, and polypropylene.

The thermoplastic starch may comprise at least one selected from the group consisting of rice starch, wheat starch, corn starch, sweet potato starch, potato starch, tapioca starch, cassava starch and modified starch thereof.

Further, the plasticizer contained in starch, which is a natural polymer, may be at least one selected from the group consisting of isosorbide, glycerol, sorbitol, fructose, formamide, xylitol, corn oil, and edible oil.

The plasticizer may be included in an amount of 5% by weight or more and 50% by weight or less, 10% by weight or more and 45% by weight or less, or 15% by weight or more and 35% by weight or less, based on the total 100% by weight of the thermoplastic starch.

The thermoplastic starch may be included in an amount of 10 to 70% by weight, and more specifically, in an amount of 10% by weight or more, 15% by weight or more, or 20% by weight or more, and 70% by weight or less, 60% by weight or less, and 50% by weight or less, based on 100% by weight of the total solid content of the biodegradable composition.

If the thermoplastic starch is included in an excessively small amount in the biodegradable composition, the biodegradation rate may become slow, and the tensile properties such as Young's modulus and yield tensile strength of the film using it may be reduced, and if the thermoplastic starch is included in an excessively large amount in the biodegradable composition, the elongation of the film using it may be lowered.

The weight ratio of the thermoplastic starch and polybutylene adipate terephthalate(PBAT) included in the biodegradable composition according to one embodiment may be 5:95 to 50:50, 5:95 to 40:60, or 10:90 to 30:70.

If the polybutylene adipate terephthalate(PBAT) is included in an excessively small amount compared to the thermoplastic starch, the elongation may be lowered, and if the polybutylene adipate terephthalate(PBAT) is included in an excessively large amount compared to the thermoplastic starch, the biodegradation rate may become slow and the tensile properties such as Young's modulus and yield tensile strength may be lowered.

The biodegradable composition according to one embodiment may include hydrophobic polybutylene adipate terephthalate, hydrophilic thermoplastic starch, and the like. Regarding whether or not their compatibility improves, it can be seen that when the dispersed phase of the thermoplastic starch is dispersed on the polybutylene adipate terephthalate matrix, the compatibility is improved as the dispersed phase of the thermoplastic starch is distributed more densely and uniformly. Further, regarding whether compatibility improves, it can be seen that as the adhesive force at the interface between polybutylene adipate terephthalate and thermoplastic starch becomes stronger, their compatibility improves. In other words, it can be said that the more densely and uniformly the dispersed phase of the thermoplastic starch is distributed on the polybutylene adipate terephthalate matrix, the better the compatibility, and that the stronger the adhesive force at the interface between polybutylene adipate terephthalate and thermoplastic starch, the better the compatibility.

Further, whether compatibility has been improved can be numerically confirmed through analysis using a polymer viscoelastic analyzer(DMA; Dynamic Mechanical Analyzer) device. For example, the glass transition temperature(Tg) of thermoplastic starch and polybutylene adipate terephthalate can be measured using a polymer viscoelastic analyzer(DMA; Dynamic Mechanical Analyzer) device to check whether compatibility is improved.

Specifically, the more densely and uniformly the dispersed phase of the thermoplastic starch is distributed on the polybutylene adipate terephthalate matrix, the lower the glass transition temperature(Tg) of the thermoplastic starch. The glass transition temperature of such thermoplastic starch can be analyzed using a polymer viscoelasticity analyzer to confirm whether compatibility is improved. Further, the stronger the adhesion at the interface between polybutylene adipate terephthalate and thermoplastic starch, the more effectively the dispersed phase of thermoplastic starch transfers stress to polybutylene adipate terephthalate, so that the glass transition temperature of polybutylene adipate terephthalate. (Tg), especially the glass transition temperature(Tg) of the butylene-adipate repeat unit, which is a soft segment, increases. The glass transition temperature of polybutylene adipate terephthalate can be analyzed using a polymer viscoelasticity analyzer to confirm whether compatibility is improved.

Therefore, the better the compatibility between polybutylene adipate terephthalate and thermoplastic starch, the lower the glass transition temperature (Tg) of the thermoplastic starch. For example, the thermoplastic starch has a glass transition temperature(Tg) of 10°C or more and 140°C or less, 15°C or more and 120°C or less, 20°C or more and 100°C or less, 25°C or more and 80°C or less, 25°C or more and 50°C or less, or 25°C or more and 40°C or less.

Further, the better the compatibility between polybutylene adipate terephthalate and thermoplastic starch, the higher the glass transition temperature(Tg) of polybutylene adipate terephthalate. For example, the glass transition temperature(Tg) of polybutylene adipate terephthalate may be -23.0°C or more and -10.0°C or less, or - 22.5°C or more and -15.0°C or less.

Further, the absolute value of the difference in glass transition temperature(Tg) of the thermoplastic starch and polybutylene adipate terephthalate is 20°C or more and 70°C or less, 25°C or more and 65°C or less, 30°C or more and 60°C or less, or 35°C or more and 59°C or less.

According to one embodiment of the present invention, there is provided a biodegradable film comprising: polybutylene adipate terephthalate(PBAT); and polybutylene adipate terephthalate(PBAT) in which maleic acid is ester-bonded to the terminal hydroxy group(-OH).

The method for producing the biodegradable film is not particularly limited, but it can be obtained using the biodegradable composition according to one embodiment by existing film production methods such as the known inflation method, tubular method, and T die casting method. For example, the composition is pelletized and the pellets are dried at 60 to 100°C for 6 hours or more so that the moisture content can be controlled to 1,200 ppm or less, 500 ppm or less, or 200 ppm or less. Subsequently, the pelletized composite can be applied to a release film, then placed in a thermocompressor, to which pressure can be applied to produce a film. At this time, the temperature may be 130°C to 250°C, 150°C to 220°C, or 160°C to 200°C, and the pressure may be 5 MPa to 20 MPa, 8 MPa to 17 MPa, or 10 MPa to 15 MPa.

Therefore, the biodegradable film may similarly include the components described above in the biodegradable composition. For example, the biodegradable film may include the polybutylene adipate terephthalate, the polybutylene adipate terephthalate in which maleic acid is ester-bonded to a terminal hydroxy group, the thermoplastic starch, polyhydroxyalkanoate, and the hydroxyalkanoate-lactide copolymer, and the like. Further, the molecular weight, content, structure, and the like of the polybutylene adipate terephthalate, the polybutylene adipate terephthalate in which maleic acid is ester-bonded to a terminal hydroxy group, the thermoplastic starch, polyhydroxyalkanoate, and the hydroxyalkanoate-lactide copolymer including in the biodegradable film are as described above. For example, the biodegradable film may include polybutylene adipate terephthalate in which maleic acid is ester-bonded to a terminal hydroxy group in an amount of 0.5% by weight to 10.0% by weight based on a total of 100% by weight of the biodegradable film. For example, the polybutylene adipate terephthalate in which maleic acid is ester-bonded to the terminal hydroxyl group is included in an amount of 0.7% by weight or more, 0.9% by weight or more, 1.0% by weight or more, or 2.0% by weight or more, and 9.0% by weight or less, 7.0% by weight or less, 6.0% by weight or less, or 5.0% by weight or less, based on a total of 100% by weight of the biodegradable film.

The thermoplastic starch may be included in an amount of 10% by weight or more and 50% by weight or less based on 100% by weight of the biodegradable film. For example, the thermoplastic starch may be included in an amount of 10% by weight or more, 15% by weight or more, 20% by weight or more, or 25% by weight or more, and 45% by weight or less, 40% by weight or less, and 35% by weight or less, based on a total of 100% by weight of the biodegradable film.

The thickness of the biodegradable film according to one embodiment may be 10 to 300 *µ*m, more specifically, 10 *µ*m or more, 13 *µ*m or more, 15 *µ*m or more, 20 *µ*m or more, or 25 *µ*m or more, and 300 *µ*m or less, 200 *µ*m or less, 150 *µ*m or less, 100 *µ*m or less, 80 *µ*m or less, and 50 *µ*m or less. Since the thickness of the film is within the above-mentioned range, the film may have strong elasticity, excellent handling properties, and satisfactory winding state and unwinding properties of the roll. If the film thickness is too thin, the tensile strength, tear strength, and elongation may deteriorate, and holes may form or tear in the film during use. If the film thickness is too thick, unit price competitiveness may be reduced. The biodegradable film can be used as agricultural mulching film, disposable gloves, individual medical packaging, food wrapping papers, garbage bags, or bags for various industrial products.

The biodegradable film according to one embodiment may have a maximum tensile strength of 5 MPa or more, 7 MPa or more, 8 MPa or more, or 5 MPa to 30 MPa, which is measured according to ASTM D882-07.

The biodegradable film according to one embodiment may have an elongation at break of 300% or more, 350% or more, 400% or more, 420% or more, 430% or more, or 300% to 700% , which is measured according to ASTM D882-07..

Further, the biodegradable film may have a Young's Modulus of 50 MPa or more, 70 MPa or more, 74 MPa or more, 80 MPa or more, and 50 MPa to 800 MPa, which is measured according to ASTM D882-07.

The maximum tensile strength, elongation at break, and Young's modulus of the biodegradable film, measured in MD (Machine Direction) and TD (Transverse Direction) directions, may each satisfy the above-mentioned numerical ranges.

### ADVANTAGEOUS EFFECTS

According to the present invention, it is possible to provide a biodegradable composition and a biodegradable film containing bio raw materials that have excellent tensile properties such as tear strength, maximum tensile strength, elongation at break, and Young's modulus while maintaining environmentally friendliness and biodegradability.

### DETAILED DESCRIPTION OF THE EMBODIMENTS

Hereinafter, the invention will be described in more detail with reference to the following examples. However, these examples are presented for illustrative purposes only, and the scope of the invention is not limited thereby in any way.

### Preparation Example 1: Preparation of thermoplastic starch

On a dry weight basis, 225 g of corn starch and 75 g of glycerol were mixed in a mixer, then charged into an extruder and compounded. The temperature range of the extruder was set to 80 to 150°C, the screw speed was set to 150 rpm, and the extruded strands were cut with a pelletizer to prepare thermoplastic starch pellets.

### Preparation Example 2: Preparation of polybutylene adipate terephthalate in which maleic acid is ester-bonded to a terminal hydroxy group (-OH)

100 g of polybutylene adipate terephthalate (PBAT, Solpol 1000N, SOLTECH) and 10 g of maleic acid was placed in an internal mixer, and reacted at 160°C at 50 rpm for 30 minutes to prepare 'polybutylene adipate terephthalate in which maleic acid is ester-bonded to the terminal hydroxy group (-OH).'

### <Examples and Comparative Examples>

### Example 1: Preparation of biodegradable film

On a dry weight basis, 750 g of polybutylene adipate terephthalate (PBAT, Solpol 1000N, SOLTECH), 250 g of thermoplastic starch prepared in Preparation Example 1 and 50 g of polybutylene adipate terephthalate in which maleic acid was ester-bonded to the terminal hydroxy group (-OH) prepared in Preparation Example 2, were mixed by hand, then charged into an extruder and compounded. The temperature range of the extruder was set to 120 to 150°C, and the screw speed was set to 150 rpm. The extruded strand was cut with a pelletizer to prepare composite pellets. The prepared composite pellets were heated to 180°C to produce a film with a thickness of 15 µm using a Film blown unit (BL50T) from Collin.

### Comparative Example 1: Production of biodegradable film

A film was produced in the same manner as Example 1, except that 50 g of polybutylene adipate terephthalate, in which maleic acid is ester-bonded to the terminal hydroxy group (-OH) prepared in Preparation Example 2, was not used.

### Evaluation

### 1. Evaluation of tensile properties

The tensile properties of the films of Examples and Comparative Examples were evaluated according to ASTM D882-07. The tensile properties include tear strength, maximum tensile strength, and elongation at break in MD (Machine Direction) and TD (Transverse Direction), and the results are shown in Table 1 below.

**[Table 1]**

| | Tear strength (gf) | | Maximum tensile strength (MPa) | | Elongation at break (%) | |
|---|---|---|---|---|---|---|
| | MD | TD | MD | TD | MD | TD |
| Example 1 | 765 | 852 | 20 | 17 | 524 | 273 |
| Comparative Example 1 | 142 | 158 | 2.8 | 2.1 | 270 | 139 |

According to Table 1, it was confirmed that Example 1 was significantly superior to Comparative Example 1 in all of the tear strength, maximum tensile strength, and elongation at break.

## Claims

1. A biodegradable composition comprising:
polybutylene adipate terephthalate(PBAT); and
polybutylene adipate terephthalate(PBAT) in which maleic acid is ester-bonded to a terminal hydroxy group (-OH).

2. The biodegradable composition of claim 1, wherein:
the polybutylene adipate terephthalate(PBAT) in which maleic acid is ester-bonded to a terminal hydroxy group(-OH) is represented by the following Chemical Formula 1 or 2: 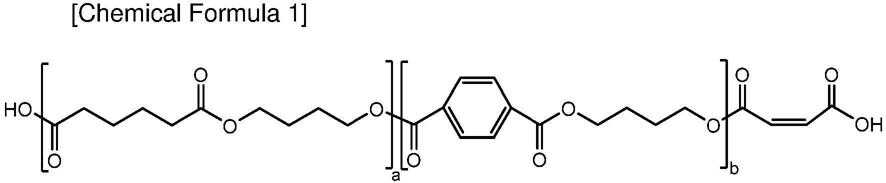 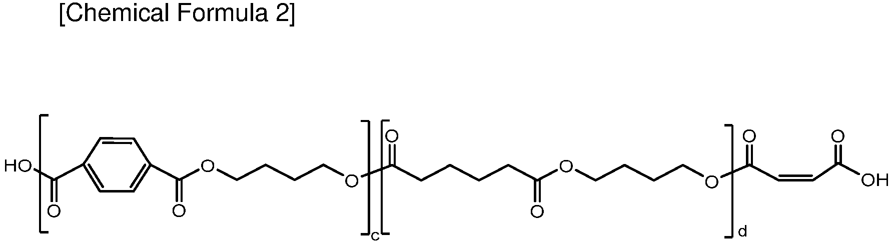
wherein, in Chemical Formulas 1 and 2,
a to d are each independently an integer of 1 to 500.

3. The biodegradable composition of claim 1,
further comprising polyhydroxyalkanoate.

4. The biodegradable composition of claim 3, wherein:
the polyhydroxyalkanoate is poly(3-hydroxypropionate).

5. The biodegradable composition of claim 1,
further comprising hydroxyalkanoate-lactide copolymer.

6. The biodegradable composition of claim 5, wherein:
the hydroxyalkanoate-lactide copolymer is 3-hydroxypropionate-lactide copolymer.

7. The biodegradable composition of claim 6, wherein:
the 3-hydroxypropionate-lactide copolymer is a block copolymer obtained by polymerizing a polylactic acid prepolymer and a poly(3-hydroxypropionate) prepolymer.

8. The biodegradable composition of claim 7, wherein:
at least one of the polylactic acid prepolymer and the poly(3-hydroxypropionate) prepolymer has a weight average molecular weight of more than 20,000 g/mol and 50,000 g/mol or less.

9. The biodegradable composition of claim 7, wherein:
a weight ratio between the polylactic acid prepolymer and the poly(3-hydroxypropionate) prepolymer is from 95:5 to 50:50.

10. The biodegradable composition of claim 7, wherein:
the 3-hydroxypropionate-lactide copolymer has the sum of the crystallinity of the polylactic acid block and the crystallinity of the poly(3-hydroxypropionate) block of 20 to 100, which is calculated according to the following Equations 1 and 2: Cristallinity of polylactic acid block(Xc_PLA) = [(PLA Tm area) - (PLA Tcc area)]/93.7
(in Equation 1, the PLA Tm area is the integral value for the peak at the melting temperature(Tm) of the polylactic acid(PLA) block within the block copolymer measured by differential scanning calorimetry, and the PLA Tcc area is the integral value for the peak at the crystallization temperature (Tcc) of the polylactic acid block within the block copolymer measured by differential scanning calorimetry) Crystallinity of poly(3-hydroxypropionate)block(Xc_P(3HP)) = [(P(3HP) Tm area) - (P(3HP) Txx area)]/64
(in Equation 2, the P(3HP) Tm area is the integral value for the peak at the melti ng temperature(Tm) of the poly(3-hydroxypropionate)(P(3HP)) block within the block copolymer measured by differential s canning calorimetry, and the P(3HP) Tcc area is the integral value for the peak at the cr ystallization temperature(Tcc) of the poly(3-hydroxypropionate) block within the block copolymer measured by differential scanning calorimetry).

11. The biodegradable composition of claim 5, wherein:
the hydroxyalkanoate-lactide copolymer has a weight average molecular weight from 50,000 to 300,000 g/mol.

12. The biodegradable composition of claim 1,
further comprising a thermoplastic starch.

13. The biodegradable composition of claim 12, wherein:
the thermoplastic starch comprises at least one selected from the group consisting of rice starch, wheat starch, corn starch, sweet potato starch, potato starch, tapioca starch, cassava starch and modified starch thereof.

14. The biodegradable composition of claim 5, wherein:
a weight ratio between the hydroxyalkanoate-lactide copolymer and the polybutylene adipate terephthalate(PBAT) is from 5:95 to 50:50.

15. The biodegradable composition of claim 12, wherein:
a weight ratio between the thermoplastic starch and the polybutylene adipate terephthalate(PBAT) is from 5:95 to 50:50.

16. A biodegradable film comprising:
polybutylene adipate terephthalate(PBAT); and
polybutylene adipate terephthalate(PBAT) in which maleic acid is ester-bonded to a terminal hydroxy group (-OH).

17. The biodegradable film of claim 16, wherein:
the polybutylene adipate terephthalate(PBAT) in which maleic acid is ester-bonded to a terminal hydroxy group(-OH) is contained in an amount of 0.1 to 10 parts by weight based on 100 parts by weight of the biodegradable film.

18. The biodegradable film of claim 16, wherein:
the biodegradable film has a maximum tensile strength of 5 MPa or more when measured according to ASTM D882-07.

19. The biodegradable film of claim 16, wherein:
the biodegradable film has an elongation at break of 300% or more when measured according to ASTM D882-07.

20. The biodegradable film of claim 16, wherein:
the biodegradable film has a Young's modulus of 50 MPa or more when measured according to ASTM D882-07.
